# EUROPEAN PATENT APPLICATION

(11) **EP 4 228 208 A1**
(43) Date of publication of application: **16.08.2023**
(21) Application number: 22210347.5
(22) Date of filing: 29.11.2022
(51) Int. Cl.: H04L 9/40, H04L 69/164

(54) **CRYPTOGRAPHIC BINDING OF DATA TO NETWORK TRANSPORT**

(30) Priority: 09.02.2022 US 202217650480
(71) Applicant: NBCUniversal Media, LLC, New York, NY 10112 (US)
(72) Inventor: DEEN, Robert Glenn, New York, 10112 (US)
(74) Representative: Keltie LLP

(57) **Abstract**

According to one embodiment, a method of cryptographically binding content to a QUIC connection is performed by a first device. The method includes: generating a key based on at least one identifier corresponding to the QUIC connection; encrypting the content using the key based on the at least one identifier corresponding to the QUIC connection; and providing the encrypted content for transmission to a second device over the QUIC connection.

## Description

### BACKGROUND

QUIC is a general-purpose transport layer network protocol, standardized by the IETF (Internet Engineering Task Force) in May 2021 in RFC 9000. It provides improved performance of connection-oriented applications that use TCP (Transmission Control Protocol). One of its features involves establishing multiplexed connections between two endpoints (e.g., a server endpoint and a client endpoint). Such multiplexed connections are established using User Datagram Protocol (UDP). From the perspective of one endpoint, the multiplexed connections allow multiple streams of data to reach the other endpoint independently with the QUIC connection being shared by different applications running on the endpoints with each application having one or more QUIC streams allocated to it.

### SUMMARY

QUIC includes features not found in TCP (Transmission Control Protocol) or UDP (User Datagram Protocol). For example, designed with high privacy and security in mind, QUIC uses TLS (Transport layer security) to establish encrypted and verified transport connections between devices or endpoints (e.g., a server endpoint and a client endpoint). QUIC also provides a feature not found in UDP or TCP transports, the ability to carry multiple non-blocking streams meaning that multiple independent data streams can flow and be processed without waiting for the data queues for other streams to be cleared first.

Aspects of the present disclosure are directed to utilizing one or more QUIC transport parameters to cryptographically bind content to an Internet protocol transport session. For example, according to one or more aspects, content is bound to an Internet protocol transport session (e.g., digital content is bound to a QUIC connection). The content may bound in a manner similar to that in which content is bound to physical media (e.g., Blu-ray discs, SD (secure digital) cards, or playback devices) using DRM (digital rights management) techniques.

According to at least one embodiment, a method of cryptographically binding content to a QUIC connection by a first device includes: generating a key based on at least one identifier corresponding to the QUIC connection; encrypting the content using the key based on the at least one identifier corresponding to the QUIC connection; and providing the encrypted content for transmission to a second device over the QUIC connection.

According to at least one embodiment, an apparatus for cryptographically binding content to a QUIC connection includes: a network communication unit configured to transmit and receive data; and one or more controllers. The one or more controllers are configured to: generate a key based on at least one identifier corresponding to the QUIC connection; encrypt the content using the key based on the at least one identifier corresponding to the QUIC connection; and provide the encrypted content for transmission to a second device over the QUIC connection.

According to at least one embodiment, a machine-readable non-transitory medium has stored thereon machine-executable instructions for cryptographically binding content to a QUIC connection by a first device. The instructions include: generating a key based on at least one identifier corresponding to the QUIC connection; encrypting the content using the key based on the at least one identifier corresponding to the QUIC connection; and providing the encrypted content for transmission to a second device over the QUIC connection.

### BRIEF DESCRIPTION OF THE DRAWINGS

The above and other aspects and features of the present disclosure will become more apparent upon consideration of the following description of embodiments, taken in conjunction with the accompanying drawing figures where:
FIG. 1 illustrates an example diagram of a known QUIC connection;
FIG. 2 illustrates an example diagram of a QUIC connection between a first endpoint device (e.g., source or server endpoint) and a second endpoint device (e.g., destination or client endpoint) according to at least one embodiment;
FIG. 3 illustrates an example diagram of a QUIC connection between a first endpoint device (e.g., source or server endpoint) and a second endpoint device (e.g., destination or client endpoint) according to at least one embodiment;
FIG. 4 illustrates an example workflow for establishing a key to cryptographically bind content to a QUIC connection according to at least one embodiment;
FIG. 5 is a flowchart illustrating a method of cryptographically binding content to a QUIC connection according to at least one embodiment;
FIG. 6 is an illustration of a computing environment according to at least one embodiment; and
FIG. 7 is a block diagram of a device according to at least one embodiment

### DETAILED DESCRIPTION

In the following detailed description, reference is made to the accompanying drawing figures which form a part hereof, and which show by way of illustration specific embodiments of the present invention. It is to be understood by those of ordinary skill in this technological field that other embodiments may be utilized, and that structural, as well as procedural, changes may be made without departing from the scope of the present invention as determined by the appended claims. Wherever possible, the same reference numbers will be used throughout the drawings to refer to the same or similar parts.

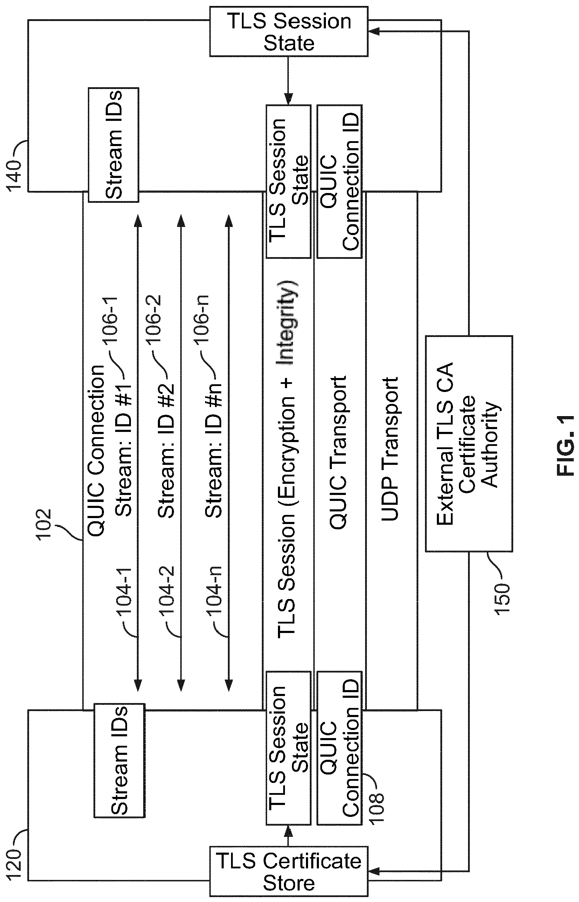

FIG. 1 illustrates an example diagram of a QUIC connection 102. The QUIC connection 102 enables multiplexed streams (or data flows) 104-1, 104-2, ... , 104-n to be established between a first endpoint device (e.g., source or server endpoint) 120 and a second endpoint device (e.g., destination or client endpoint) 140. The streams may correspond to data streams from/to the first endpoint device 120 to/from the second endpoint device 140. Such streams can be unidirectional or bidirectional. Unidirectional streams carry data in one direction, that is, from the initiator of the stream to its peer. In contrast, bidirectional streams allow for data to be sent in both directions.

The QUIC connection 102 uses TLS (Transport layer security) to establish encrypted and verified transport connections between the first endpoint device 120 and the second endpoint device 140. Here, digital certificates for establishing cryptographic handshakes according to the TLS protocol are issued by an external TLS CA (Certificate Authority) 150, which provides the corresponding certificates to the endpoints 120, 140.

The QUIC connection 102 uses the trust and integrity established in a TLS cryptographic session to create and manage a set of identifiers between the first endpoint device 120 and the second endpoint device 140. Such identifiers include connection identifiers (IDs) and stream IDs. Connection IDs will now be further described.

Each QUIC connection possesses a set of one or more connection IDs, each of which can be used to identify the connection. With reference to FIG. 1, Connection ID 108 identifies the QUIC connection 102. Connection IDs may be independently selected by endpoints. Each endpoint selects the connection IDs that its peer uses.

The Connection ID ensures that changes in addressing at lower protocol layers (e.g., UDP (User Datagram Protocol), IP (Internet Protocol)) do not cause packets (or data) in a QUIC connection to be delivered to an incorrect endpoint. Each endpoint may select a connection ID(s) using an implementation-specific (and perhaps deployment-specific) method that will allow packets carrying that connection ID to be routed back to the endpoint and to be identified by the endpoint upon receipt.

Multiple connection IDs may be used so that packets sent cannot be identified by an outside observer as being for the same connection, without cooperation from at least one of the endpoints. Using a stable connection ID on multiple network paths may allow a passive observer to correlate activity between those paths. An endpoint that moves between networks may not want any entity (other than its peer) to be able to correlate its activity in this manner. Therefore, different connection IDs may, advantageously, be used when sending data from different local addresses.

Here, endpoints aim to ensure that connection IDs provided by either endpoint cannot be linked by any other entity. Accordingly, connection IDs may be used to enable connections to be moved from one device to another (e.g., a connection moving from one server to another and/or a connection moving from one client to another).

A stream ID is a numeric value that identifies a stream within a connection. The stream ID is a 62-bit integer (0 to 2⁶²-1) that uniquely identifies a stream within a connection. With reference to FIG. 1, each multiplexed stream 104-1, 104-2, ..., 104-n is uniquely identified by stream ID 106-1, 106-2, .., 106-n, respectively.

For purposes of illustration, it may be useful to consider a QUIC connection as a type of virtual multi-wire cable, where each end of the cable is identifiable by its respective connection ID(s). In addition, each of the multiple wires is identifiable by its respective stream ID. All wires are wrapped in a sheath that establishes a cryptographic system of exchanged keys, integrity and trust.

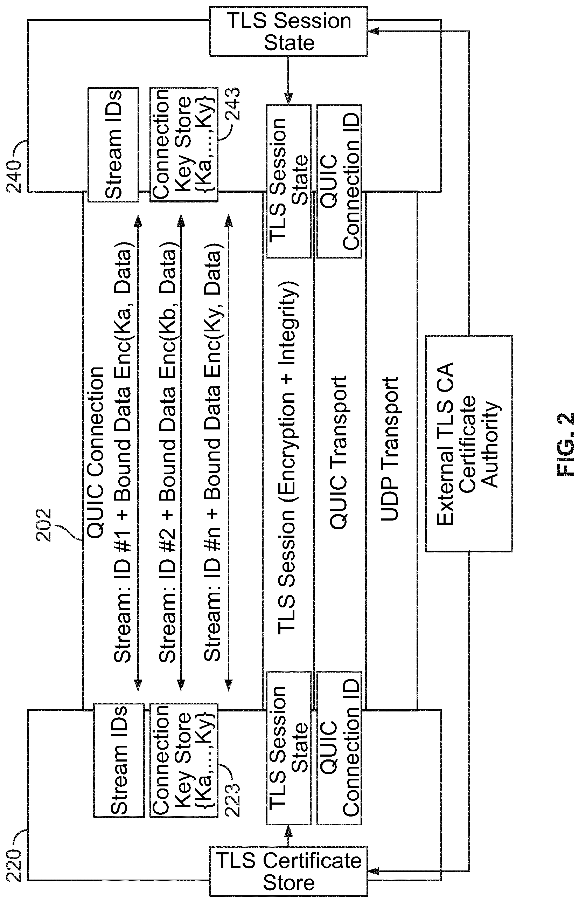

One or more aspects of the present disclosure are directed to binding digital content to an Internet protocol transport session (e.g., a session that includes a QUIC connection such as QUIC connection 102). These aspects will be described in more detail with reference to FIGs. 2, 3 and 4.

FIG. 2 illustrates an example diagram of a QUIC connection 202 between a first endpoint device (e.g., server endpoint) 220 and a second endpoint device (e.g., client endpoint) 240 according to at least one embodiment. The first endpoint device 220 and the second endpoint device 240 may retrieve one or more keys from Connection Key Store 223. According to at least one embodiment, the key(s) stored in the Connection Key Store 223 may be utilized to bind digital content to the QUIC connection 202. Unlike in existing DRM systems, where the DRM keys (or other digital identifiers) are cryptographically bound either to devices that play content or to media used to transport the content to the devices, the Connection Key Store 223 used in the cryptographic system provides keys that are bound to a digital QUIC connection.

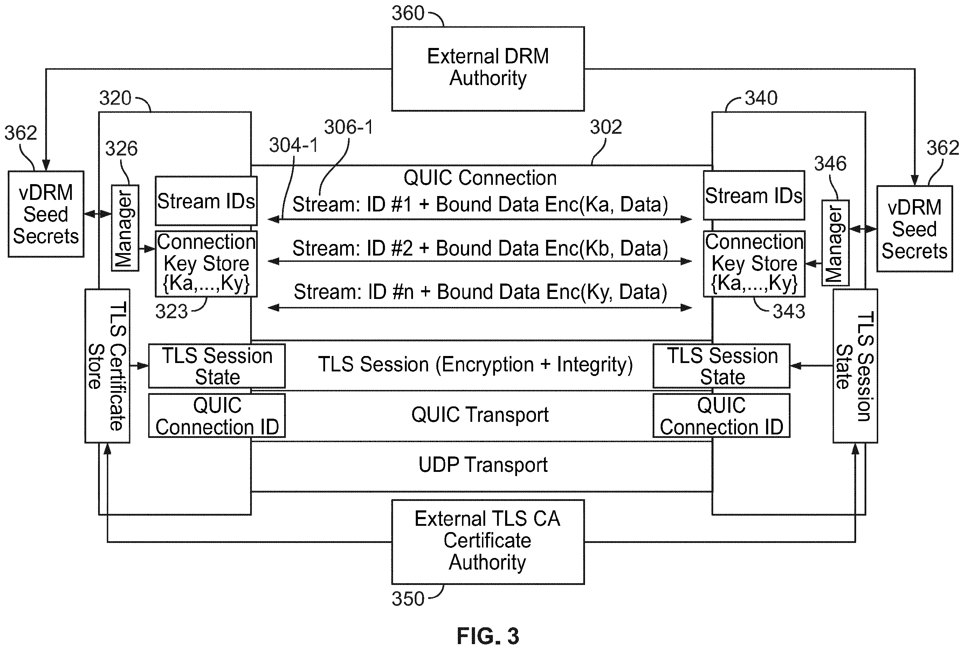

FIG. 3 illustrates an example diagram of a QUIC connection 302 between a first endpoint device (or first endpoint) 320 and a second endpoint device (or second endpoint) 340 according to at least one embodiment.

With reference to FIG. 3, an external DRM authority 360 issues vDRM seed secrets 362 that are accessible by the first endpoint 320 and the second endpoint 340 exclusively. Accordingly, apart from the external DRM authority 360 itself, the vDRM Seed Secrets 362 are known only to the first endpoint 320 and the second endpoint 340. Each vDRM seed secret may be a data value such as a binary data value (e.g., a 128-bit binary value).

For example, at the first endpoint 320, a manager (or DRM state manager) 326 may access the vDRM seed secrets 362 to read one or more of the seed secrets. The manager 326 may cause a key that corresponds to one or more of the read secrets to be stored at the Connection Key Store 323.

Similarly, at the second endpoint 340, a manager 346 may access the vDRM seed secrets 362 to read one or more of the seed secrets. The manager 346 may cause a key that corresponds to one or more of the read secrets to be stored at the Connection Key Store 343.

According to at least one embodiment, the external DRM authority 360 is independent of and operates separately from the external TLS CA 350 and issues digital certificates for establishing cryptographic handshakes according to the TLS protocol. When the external DRM authority 360 and the external TLS CA 350 are independent of each other, a level of security is heightened. For example, vulnerability at one authority does not necessarily lead to exposure of the other authority. As such, the security or integrity of the other is better protected.

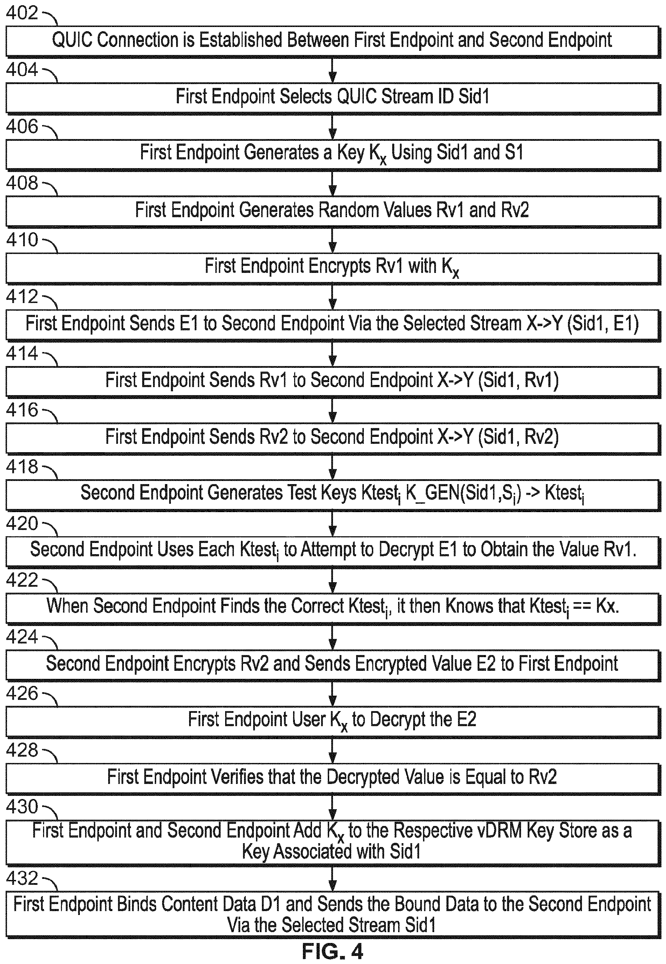

FIG. 4 illustrates an example workflow for establishing a key to cryptographically bind content to a QUIC connection according to at least one embodiment.

As will be described in more detail below with reference to FIGs. 3 and 4, a security key is generated via exchange of information over a QUIC stream, where at least one endpoint (or side) of the QUIC connection generates one or more random values and uses the security and integrity of the QUIC connection to share the value(s) with the other endpoint (or side).

At block 402, a QUIC connection (e.g., QUIC connection 302) is established between the endpoints (e.g., the first endpoint device 320 and the second endpoint device 340).

At block 404, a first endpoint device (e.g., first endpoint device 320) selects a stream for sharing a random value with the second endpoint device (e.g., second endpoint device 340). For example, referring to FIG. 3, the first endpoint device 320 may select the stream corresponding to the multiplexed stream 304-1, which is identifiable by the stream ID 306-1. For ease of description, the value of the stream ID 306-1 will be denoted as Sid1.

At block 406, the first endpoint device generates a cryptographic key Kₓ. Here, Sid1 and a seed secret S1 may be used as inputs to a cryptographic function Kx_Gen. The generation of the cryptographic key Kₓ may be expressed as Kx_Gen(Sid1, S1) -> Kₓ. As noted earlier, Sid1 denotes the value of the stream ID 306-1. S1 denotes a seed secret that is selected by the first endpoint device 320 from among the vDRM Seed Secrets 362. For example, the manager 326 may select the seed secret S1 from among the vDRM Seed Secrets 362.

Based upon the noted input values, the first endpoint device 320 generates a cryptographic key Kₓ using the cryptographic function Kx_Gen. According to at least one embodiment, the cryptographic function is a function that produces a same unique output for two given inputs. For example, the cryptographic function may be a one-way hash function. By way of example, the length of the resulting key Kₓ may be 128, 256, 512, or 1024 bits.

At block 408, the first endpoint device generates random values Rv1 and Rv2. As will be explained, these random values will be used as challenge values, and shared with the second endpoint device 340.

At block 410, the first endpoint device encrypts the random value Rv1 using Kₓ to produce an encrypted value E1. The generation of the encrypted value E1 may be expressed as Enc(Kₓ, Rv1) -> E1.

At block 412, the first endpoint device sends the encrypted value E1 to the second endpoint device via the selected QUIC connection stream (e.g., the stream 304-1 identifiable by the stream ID value of Sid1). For purposes of explanation, the sending of the encrypted value E1 is denoted as X->Y (Sid1, E1).

At block 414, the first endpoint device sends the random value Rv1 to the second endpoint device via the selected QUIC connection stream (X->Y (Sid1, Rv1)).

At block 416, the first endpoint device sends the random value Rv2 to the second endpoint device via the selected QUIC connection stream (X->Y (Sid1, Rv2)).

At block 418, the second endpoint device generates test keys in an attempt to decrypt the value E1. The test keys may be generated iteratively based on the vDRM Seed Secrets 362. For purposes of illustration, it is assumed that the vDRM Seed Secrets contains N secrets Sᵢ, where i = 1, 2, .... , N. For each seed secret Sᵢ, the second endpoint 340 generates a corresponding cryptographic key Ktestᵢ by using Sid1 and the seed secret Sᵢ as inputs to a cryptographic function K_GEN. The generation of the cryptographic key Ktestᵢ may be expressed as K_GEN(Sid1, Sᵢ) -> Ktestᵢ. Here, it is understood that the cryptographic function K_GEN matches the cryptographic function Kx_Gen used by the first endpoint 320 at block 406.

At block 420, the second endpoint device uses each cryptographic key Ktestᵢ to attempt to decrypt the value E1 that was sent at block 412. The decryption of the encrypted value E1 may be expressed as DEC(Ktestᵢ, E1) -> Vᵢ ?= Rv1. The decryption of E1 using the cryptographic key Ktestᵢ may be performed iteratively until a decryption results in a value Vᵢ that equals the random value Rv1 that was sent at block 412.

At block 422, the second endpoint device has identified a Ktestᵢ that effectively produces a value Vᵢ equaling the random value Rv1. For example, the second endpoint device 340 identifies the cryptographic key Ktestᵢ as matching the cryptographic key Kₓ used earlier by the first endpoint device 320.

At block 424, the second endpoint device uses the identified Ktestᵢ to encrypt the random value Rv2. The random value Rv2 is encrypted using Ktestᵢ to produce an encrypted value E2. For example, the generation of the encrypted value E2 may be expressed as Enc(Ktestᵢ, Rv2) -> E2. The second endpoint device 340 sends the encrypted value E2 to the first endpoint device 320 via the selected QUIC connection stream (Y->X(Sid1, Enc(Ktestᵢ, Rv2))).

At block 426, the first endpoint device uses the cryptographic key Kₓ to decrypt the encrypted value E2 that was sent by the second endpoint device. The decryption of the encrypted value E2 may be expressed as DEC(Kₓ, E2) -> V.

At block 428, the first endpoint device determines whether the decrypted value V is equal to Rv2. If V is equal to Rv2, the first endpoint device 320 verifies that the second endpoint device 340 has correctly identified the cryptographic key Kₓ that was generated earlier (see block 406). The key Kₓ was not known to any other known entity, and could not be easily derived by any such entity. As such, the first endpoint device 320 recognizes the second endpoint device 340 as a trusted peer, with whom it is possible to securely exchange content via the selected QUIC connection stream.

At block 430, the first endpoint device and the second endpoint device store the cryptographic key Kₓ at the Connection Key Stores (e.g., the Connection Key Stores 323 and 343, respectively), as a key that is associated with the selected QUIC connection stream.

At block 432, the first endpoint device binds content data D1 using the cryptographic key Kₓ and sends the bound data via the selected QUIC connection stream using any of a variety of cryptographic binding transforms. For example, the sending of the data may be denoted as X->Y (Sid1, Enc(Kx, D1)).

For purposes of illustration, the example of FIG. 4 was described with reference to an establishment of a key, as initiated by the first endpoint device. However, it is understood that such an establishment may be initiated by the second endpoint device as well.

According to a further embodiment, the encryption and decryption operations described with reference to FIG. 4 may employ additional values (e.g., time-based values, sequence-based values or cryptographically-verified nonce values) to provide additional integrity during exchanges involved in key establishment and to help defend against attacks such as replay attacks and man-in-the-middle attacks. Employing additional data (e.g., nonces, time stamps and/or sequence numbers) in exchanges may promote the thwarting of attacks such as play back attacks.

According to a further embodiment, the second endpoint device may validate the first endpoint device as a trusted peer. This validation may be performed in a manner similar to that in which the first endpoint device 320 validated the second endpoint device 340 (see blocks 408 to 428). For example, after block 428, the second endpoint device 340 may validate the first endpoint device 320 by first producing two random values (e.g., Rv3 and Rv4) and then encrypting Rv3 with Kₓ, etc. After the second endpoint device 340 verifies that the first endpoint 320 has correctly identified the cryptographic key Kₓ that had been used to encrypt Rv3, the first endpoint device 320 and the second endpoint device 340 may proceed to store the cryptographic key Kₓ at the Connection Key Stores 323 and 343, respectively (see, e.g., block 430).

As has been described with reference to FIG. 4, a single key (Kₓ) is established and associated with the stream corresponding to the stream ID of Sid1. According to at least one embodiment, two or more keys may be established and associated with a same stream. For example, each of these two or more keys may be established in a manner similar to that described earlier with reference to FIG. 4.

Also in a manner similar to that which was described earlier, one or more keys may be established for each of multiple streams. Accordingly, different content can be respectively bound to different streams (e.g., multiplexed streams 104-1, 104-2, ..., 104-n) of a same QUIC connection. For example, an HD (high-definition) version of a movie or television program may be bound to a first stream (e.g., multiplexed stream 104-1). In addition, a 4K version of the same movie or television program may be bound to a different stream (e.g., multiplexed stream 104-2). The HD content may be bound to the stream 104-1 using one or more secrets known only to HD-authorized devices (e.g., HD-authorized playback devices). Similarly, the 4K content may be bound to the stream 104-2 using one or more secrets known only to 4K-authorized devices (e.g., 4K-authorized playback devices). Accordingly, encrypted content may be selectively delivered to users based on, for example, a subscription level.

In addition to preventing unauthorized content decode and playback, features that have been described may also be used to manage enablement of features such as trick play, record/save, etc. For example, with respect to a system in which content can be streamed and downloaded for offline viewing, a first stream of a QUIC connection may be used to facilitate streaming, and a second stream may be used to transmit keys or credentials for decrypting downloaded content at a later time. Alternatively, the downloaded content may be transmitted over the second stream of the QUIC connection.

As another example of different content being respectively bound to different streams, content corresponding to a primary television show may be bound to a first stream, content corresponding to supplementary audio may be bound to a second stream, and content corresponding to advertisements may be bound to a third stream. Because each of the streams are protected using a respective set of one or more security keys, different underlying applications are able to operate independently of each other. For example, an application managing delivery of the primary television show and an application managing delivery of the advertisement may each operate independently of the other without being required to share its security keys with the other.

As has been described with reference to FIG. 4, a stream ID associated with a particular stream of a QUIC connection may be used to generate a cryptographic key (see, e.g., blocks 406, 418). In at least one embodiment, a cryptographic key may be generated based also on a connection ID that identifies the QUIC connection. This provides yet another level of security in generating and establishing the key. For example, the stream ID, the connection ID and a seed secret (e.g., S 1) may be input to a cryptographic function that produces a same unique output based on three given inputs.

As described earlier with reference to FIG. 1, connection IDs of a QUIC connection may be used to enable connections to be moved from one device to another (e.g., a connection moving from one server to another, or a connection moving from one client to another). For example, a user may wish to move a particular connection from one client (e.g., a first television device) to another client (e.g., a second television device).

In this situation, according to at least one embodiment, previously established keys (e.g., stored at Connection Key Stores 323 and 343) are maintained. As such, previously established keys may be re-established between the server endpoint and the new client endpoint when a connection is moved. For example, with reference back to FIG. 4, the first endpoint device may initiate the re-establishment of a given key by generating random values (see block 408). After the random values are generated, the re-establishment of the key may proceed in the manner described earlier with reference to FIG. 4. In this embodiment, new keys based on the stream ID and/or connection ID are not created.

According to at least another embodiment, one or more new keys may be established when the connection is moved. For example, with reference back to FIG. 4, the first endpoint device may initiate establishment of a new key by generating a new key (see block 406). After the new key is generated, the establishment of the new key may proceed in the manner described earlier with reference to FIG. 4.

According to one or more aspects, cryptographic binding of content to an Internet protocol transport session (e.g., digital content is bound to a QUIC connection) may also be extended to content in physical media (e.g., Blu-ray discs, SD (secure digital) cards, or playback devices).

Before the introduction of the QUIC transport protocol, it has been difficult to bind content to an Internet protocol transport session in such a manner. This is because the Internet protocol transport session is implemented in the underlying kernel of the device operating system, while DRM-based systems and playback workflow are implemented in separate parts of the operating system or in an application system that sits on top of the operating system. This separation prevented a DRM-based system and a content player system that manages the content from accessing the low-level Internet transport protocol information that would be used in the cryptographic binding. In addition, prior to QUIC, IP transport protocols such as TCP and UDP did not feature cryptographically verified integrity of protocol identifiers such as that which QUIC provides.

Features described herein may be implemented not only in digital content delivery systems such as streaming platforms, but also in legacy cable delivery systems that use IP delivery as well as new systems such as ATSC3.0 that use features of the QUIC transport protocol to establish DRM systems that are tied to the IP transports used to deliver the content. For example, features described herein may be applied in a connection between a media player (e.g., a Blu-ray disc player) to a television. In this regard, techniques described herein may serve as a replacement for HDCP (High-Bandwidth Digital Content Protection) in an HDMI (High-Definition Multimedia Interface) connection.

If the connection is a wired connection, the connection may employ HDMI cables that run IP protocols on top of which the QUIC connection sits, where the QUIC connection has cryptographic binding enabled. It is understood that, alternatively, the connection may employ Ethernet cables, which may be more cost effective and may have higher bandwidth than HDMI cables to facilitate transfer of more data over any given period of time. If the connection is a wireless connection, features and/or techniques described herein may be implemented on personal devices within a network (e.g., Internet Protocol (IP) network) such as in a home or an office. For example, the cryptographic binding could securely send content between a mobile device such as a phone, laptop computer or tablet computer to the TV. By way of example, content may be sent from a first device to a second device simply via an IP network, which facilitates communication between these two devices. For example, a home network may facilitate communications between a cable box and a television that are in the home network. It is understood that such a network may also facilitate communication with one or more other devices that are also in the network.

The IP network may be a local area network that may or may not connected to the Internet. If the IP network is connected to the Internet, then communications between a device (e.g., the first device and/or the second device) and a device that is outside of the IP network may be facilitated. For example, the cable box may communicate, via the Internet, with a device that is outside of its home network. Alternatively, the IP network may not have Internet connectivity, and only devices with access to the IP network may communicate with each other.

Binding content to a QUIC stream would render the content unusable except to network endpoints that are able to receive and read the QUIC stream. Even if some other device (e.g., observer device) succeeded in unwrapping the TLS encryption of the QUIC connection, the bound content would not be fully decoded. Rather, the observer device would be required to perform the needed DRM transformations to unbind the content from the stream and decode/play it.

In terminology used herein, it has been described that "content" is bound to an Internet protocol transport session (e.g., QUIC connection). It is understood that, through use of one or more levels of indirection (e.g., using encrypted content keys), it is not the content that is directly bound to the connection. Rather, the means to access the content is bound to the connection.

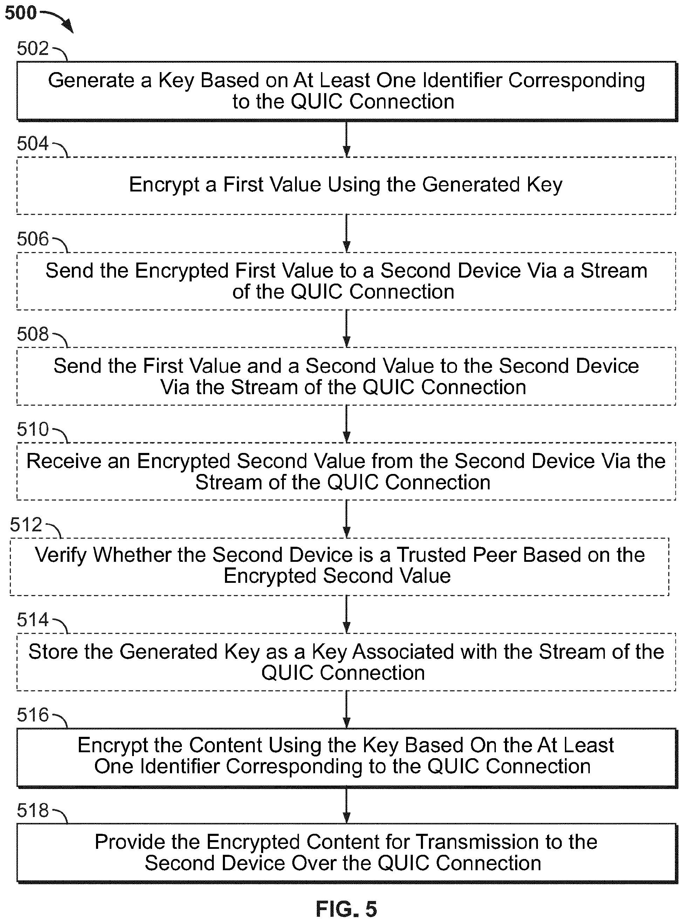

FIG. 5 illustrates a flowchart of a method 500 of cryptographically binding content to a QUIC connection by a first device according to at least one embodiment.

At block 502, a key is generated based on at least one identifier corresponding to the QUIC connection. For example, with reference to block 406 of FIG. 4, the first endpoint device generates a cryptographic key Kₓ. As an example, the key may be generated based on a seed secret and a stream identifier (stream ID) of a stream of the QUIC connection. In this regard, the seed secret may be selected from a plurality of seed secrets that are associated with an external certificate authority. As another example, the key may be generated based on a seed secret, a stream ID of the stream of the QUIC connection, and a connection identifier (connection ID) of the QUIC connection.

At block 504, a first value may be encrypted using the generated key. For example, with reference to block 410 of FIG. 4, the first endpoint device may encrypt the random value Rv1 using Kₓ to produce an encrypted value E1.

At block 506, the encrypted first value may be sent to the second device via a stream of the QUIC connection. For example, with reference to block 412 of FIG. 4, the first endpoint device may send the encrypted value E1 to the second endpoint device via the selected QUIC connection stream.

At block 508, the first value and a second value may be sent to the second device via the stream of the QUIC connection. For example, with reference to blocks 414, 416 of FIG. 4, the first endpoint device may send the random value Rv1, Rv2 to the second endpoint device via the selected QUIC connection stream.

At block 510, an encrypted second value may be received from the second device via the stream of the QUIC connection. For example, with reference to block 424 of FIG. 4, the second endpoint device 340 may send the encrypted value E2 to the first endpoint device 320 via the selected QUIC connection stream.

At block 512, it may be verified whether the second device is a trusted peer based on the encrypted second value. For example, with reference to block 428 of FIG. 4, the first endpoint device may determine whether the decrypted value V is equal to Rv2. If V is equal to Rv2, the first endpoint device 320 verifies that the second endpoint device 340 has correctly identified the cryptographic key Kₓ that was generated earlier (see block 406). As such, the first endpoint device 320 recognizes the second endpoint device 340 as a trusted peer, with whom it is possible to securely exchange content via the selected QUIC connection stream.

At block 514, in response to the decrypted value being equal to the second random value, the generated key may be stored as a key associated with the stream of the QUIC connection. For example, with reference to block 430 of FIG. 4, the first endpoint device may store the cryptographic key Kₓ at the Connection Key Stores 323 as a key that is associated with the selected QUIC connection stream.

At block 516, the content is encrypted using the key based on the at least one identifier corresponding to the QUIC connection.

At block 518, the encrypted content is provided for transmission to the second device over the QUIC connection. For example, with reference to block 432 of FIG. 4, the first endpoint device binds content data D1 using the cryptographic key Kₓ and sends the bound data via the selected QUIC connection stream.

In at least some embodiments, the first endpoint 220, the second endpoint 240, the first endpoint 320, the second endpoint 340, or other aspects of described system(s) may include one or more software or hardware computer systems and may further include (or may be operably coupled to) one or more hardware memory systems for storing information including databases for storing, accessing, and querying various content, encoded data, shared addresses, metadata, etc. In hardware implementations, the one or more computer systems incorporate one or more computer processors and controllers.

The components of various embodiments described herein may each include a hardware processor of the one or more computer systems, and, in one embodiment, a single processor may be configured to implement the various components. For example, in one embodiment, the first endpoint 220 (or 320), the second endpoint 240 (or 340), or combinations thereof, may be implemented as separate hardware systems, or may be implemented as a single hardware system. The hardware system may include various transitory and non-transitory memory for storing information, wired and wireless communication receivers and transmitters, displays, and input and output interfaces and devices. The various computer systems, memory, and components of the system may be operably coupled to communicate information, and the system may further include various hardware and software communication modules, interfaces, and circuitry to enable wired or wireless communication of information.

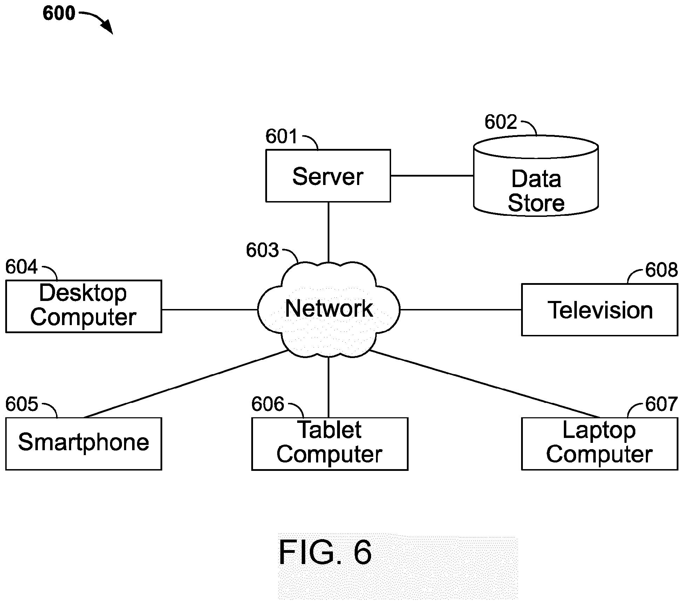

In selected embodiments, features and aspects described herein may be implemented within a computing system 600, as shown in FIG. 6, which may include one or more computer servers 601. The server 601 may be operatively coupled to one or more data stores 602 (e.g., databases, indexes, files, or other data structures). The server 601 may connect to a data communication network 603 including a local area network (LAN), a wide area network (WAN) (e.g., the Internet), a telephone network, a satellite or wireless communication network, or some combination of these or similar networks.

One or more client devices 604, 605, 606, 607, 608 may be in communication with the server 601, and a corresponding data store 602 via the data communication network 603. Such client devices 604, 605, 606, 607, 608 may include, for example, one or more laptop computers 607, desktop computers 604, smartphones and mobile phones 605, tablet computers 606, televisions 608, or combinations thereof. In operation, such client devices 604, 605, 606, 607, 608 may send and receive data or instructions to or from the server 601 in response to user input received from user input devices or other input. In response, the server 601 may serve data from the data store 602, alter data within the data store 602, add data to the data store 602, or the like, or combinations thereof.

In selected embodiments, the server 601 may transmit one or more media files including audio and/or video content, encoded data, generated data, and/or metadata from the data store 602 to one or more of the client devices 604, 605, 606, 607, 608 via the data communication network 603. The devices may output the audio and/or video content from the media file using a display screen, projector, or other display output device. In certain embodiments, the system 600 configured in accordance with features and aspects described herein may be configured to operate within or support a cloud computing environment. For example, a portion of, or all of, the data store 602 and server 601 may reside in a cloud server.

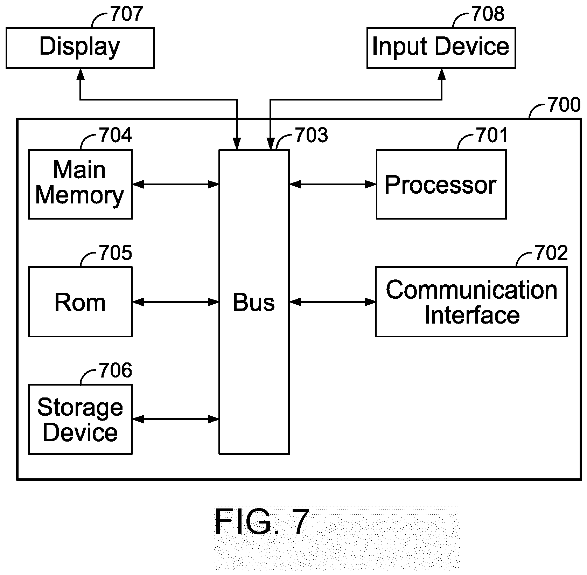

With reference to FIG. 7, an illustration of an example computer 700 is provided. One or more of the devices 604, 605, 606, 607, 608 of the system 600 may be configured as or include such a computer 700. In addition, one or more components of the first endpoint 220, the second endpoint 240, the first endpoint 320, or the second endpoint 340 may be configured as or include the computer 700.

In selected embodiments, the computer 700 may include a bus 703 (or multiple buses) or other communication mechanism, a processor 701, main memory 704, read only memory (ROM) 705, one or more additional storage devices 706, and/or a communication interface 702, or the like or subcombinations thereof. Embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. In all embodiments, the various components described herein may be implemented as a single component, or alternatively may be implemented in various separate components.

The bus 703 or other communication mechanism, including multiple such buses or mechanisms, may support communication of information within the computer 700. The processor 701 may be connected to the bus 703 and process information. In selected embodiments, the processor 701 may be a specialized or dedicated microprocessor configured to perform particular tasks in accordance with the features and aspects described herein by executing machine-readable software code defining the particular tasks. Main memory 704 (e.g., random access memory-or RAM-or other dynamic storage device) may be connected to the bus 703 and store information and instructions to be executed by the processor 701. Main memory 704 may also store temporary variables or other intermediate information during execution of such instructions.

ROM 705 or some other static storage device may be connected to a bus 703 and store static information and instructions for the processor 701. The additional storage device 706 (e.g., a magnetic disk, optical disk, memory card, or the like) may be connected to the bus 703. The main memory 704, ROM 705, and the additional storage device 706 may include a non-transitory computer-readable medium holding information, instructions, or some combination thereof -- for example, instructions that, when executed by the processor 701, cause the computer 700 to perform one or more operations of a method as described herein. The communication interface 702 may also be connected to the bus 703. A communication interface 702 may provide or support two-way data communication between the computer 700 and one or more external devices (e.g., other devices contained within the computing environment).

In selected embodiments, the computer 700 may be connected (e.g., via the bus 703) to a display 707. The display 707 may use any suitable mechanism to communicate information to a user of a computer 700. For example, the display 707 may include or utilize a liquid crystal display (LCD), light emitting diode (LED) display, projector, or other display device to present information to a user of the computer 700 in a visual display. One or more input devices 708 (e.g., an alphanumeric keyboard, mouse, microphone) may be connected to the bus 703 to communicate information and commands to the computer 700. In selected embodiments, one input device 708 may provide or support control over the positioning of a cursor to allow for selection and execution of various objects, files, programs, and the like provided by the computer 700 and displayed by the display 707.

The computer 700 may be used to transmit, receive, decode, display, etc. one or more video files. In selected embodiments, such transmitting, receiving, decoding, and displaying may be in response to the processor 701 executing one or more sequences of one or more instructions contained in main memory 704. Such instructions may be read into main memory 704 from another non-transitory computer-readable medium (e.g., a storage device).

Execution of sequences of instructions contained in main memory 704 may cause the processor 701 to perform one or more of the procedures or steps described herein. In selected embodiments, one or more processors in a multi-processing arrangement may also be employed to execute sequences of instructions contained in main memory 704. Alternatively, or in addition thereto, firmware may be used in place of, or in connection with, software instructions to implement procedures or steps in accordance with the features and aspects described herein. Thus, embodiments in accordance with features and aspects described herein may not be limited to any specific combination of hardware circuitry and software.

Non-transitory computer readable medium may refer to any medium that participates in holding instructions for execution by the processor 701, or that stores data for processing by a computer, and include all computer-readable media, with the sole exception being a transitory, propagating signal. Such a non-transitory computer readable medium may include, but is not limited to, non-volatile media, volatile media, and temporary storage media (e.g., cache memory). Non-volatile media may include optical or magnetic disks, such as an additional storage device. Volatile media may include dynamic memory, such as main memory. Common forms of non-transitory computer-readable media may include, for example, a hard disk, a floppy disk, magnetic tape, or any other magnetic medium, a CD-ROM, DVD, Blu-ray or other optical medium, RAM, PROM, EPROM, FLASH-EPROM, any other memory card, chip, or cartridge, or any other memory medium from which a computer can read.

In selected embodiments, the communication interface 702 may provide or support external, two-way data communication to or via a network link. For example, the communication interface 702 may be a wireless network interface controller or a cellular radio providing a data communication network connection. Alternatively, the communication interface 702 may include a LAN card providing a data communication connection to a compatible LAN. In any such embodiment, the communication interface 702 may send and receive electrical, electromagnetic, or optical signals conveying information.

A network link may provide data communication through one or more networks to other data devices (e.g., client devices as shown in the computing system 600). For example, a network link may provide a connection through a local network of a host computer or to data equipment operated by an Internet Service Provider (ISP). An ISP may, in turn, provide data communication services through the Internet. Accordingly, a computer 700 may send and receive commands, data, or combinations thereof, including program code, through one or more networks, a network link, and communication interface 702. Thus, the computer 700 may interface or otherwise communicate with a remote server (e.g., server 601), or some combination thereof.

The various devices, modules, terminals, and the like described herein may be implemented on a computer by execution of software comprising machine instructions read from computer-readable medium, as discussed above. In certain embodiments, several hardware aspects may be implemented using a single computer; in other embodiments, multiple computers, input/output systems and hardware may be used to implement the system.

For a software implementation, certain embodiments described herein may be implemented with separate software modules, such as procedures and functions, each of which performs one or more of the functions and operations described herein. The software codes can be implemented with a software application written in any suitable programming language and may be stored in memory and executed by a controller or processor.

The foregoing described embodiments and features are merely exemplary and are not to be construed as limiting the present invention. The present teachings can be readily applied to other types of apparatuses and processes. The description of such embodiments is intended to be illustrative, and not to limit the scope of the claims. Many alternatives, modifications, and variations will be apparent to those skilled in the art.

## Claims

1. A method (500) of cryptographically binding content to a QUIC connection (202; 302) by a first device (220; 320), the method comprising:
generating (502) a key (Kₓ) based on at least one identifier corresponding to the QUIC connection (202; 302);
encrypting (516) the content using the key (Kₓ) based on the at least one identifier corresponding to the QUIC connection (202; 302); and
providing (518) the encrypted content for transmission to a second device (240; 340), over the QUIC connection (202; 302).

2. The method of Claim 1, wherein generating (502) the key (Kₓ) comprises generating the key (Kₓ) based on a seed secret (362) and a stream identifier (stream ID) of a stream (304) of the QUIC connection (202; 302).

3. The method of Claim 2, wherein generating (502) the key (Kₓ) further comprises selecting the seed secret (362) from a plurality of seed secrets (362), wherein the plurality of seed secrets (362) are associated with an external certificate authority (350).

4. The method of Claim 2 or 3, wherein generating (502) the key (Kₓ) further comprises generating (502) the key (Kₓ) based on a connection identifier (connection ID) of the QUIC connection (202; 302).

5. The method of any preceding claim, further comprising:
encrypting (410) a first value (Rᵥ₁) using the generated key (Kₓ);
sending (412) the encrypted first value (E₁) to the second device (240; 340) via a stream of the QUIC connection (202; 302);
sending (414, 416) the first value (Rᵥ₁) and a second value (Rᵥ₂) to the second device (240; 340) via the stream of the QUIC connection (202; 302);
receiving (424) an encrypted second value (E₂) from the second device (240; 340) via the stream of the QUIC connection (202; 302); and
verifying (426, 428) whether the second device (240; 340) is a trusted peer based on the encrypted second value (E₂).

6. The method of Claim 5, wherein verifying (426, 428) whether the second device (240; 340) is a trusted peer comprises:
decrypting (426) the encrypted second value (E₂) using the generated key (Kₓ) to produce a decrypted value; and
verifying (428) that the second device (240; 340) is a trusted peer in response to the decrypted value being equal to the second value (Rᵥ₂).

7. The method of Claim 6, further comprising, in response to the decrypted value being equal to the second value (Rᵥ₂), storing (430) the generated key (Kₓ) as a key associated with the stream of the QUIC connection (202; 302).

8. The method of any preceding claim, wherein the QUIC connection (202; 302) has a plurality of streams and a respective key (Kₓ) is generated for each of the plurality of streams.

9. The method of any preceding claim, wherein the QUIC connection (202; 302) has a plurality of streams and the generated key (Kₓ) is shared by two or more of the plurality of streams.

10. The method of Claims 8 or 9, wherein:
a first stream of the plurality of streams is for carrying data corresponding to a first application; and
a second stream of the plurality of streams is for carrying data corresponding to a second application different from the first application.

11. The method of Claim 10, wherein the first application corresponds to a user subscription level different from a user subscription level to which the second application corresponds.

12. The method of any preceding claim, wherein the encrypted content is provided for wired or wireless transmission to the second device (240; 340) with a device-to-device connection.

13. The method of any preceding claim, wherein, in response to a moving of the QUIC connection (202; 302) from either the first device (220; 320) or the second device (240; 340) to a third device, either the generated key (Kₓ) is re-established for the moved QUIC connection (202; 302), or at least one key (Kₓ) is newly generated for the moved QUIC connection (202; 302).

14. An apparatus for cryptographically binding content to a QUIC connection, the apparatus comprising:
a network communication unit configured to transmit and receive data; and
one or more controllers configured to:
generate a key (Kₓ) based on at least one identifier corresponding to the QUIC connection (202; 302);
encrypt the content using the key (Kₓ) based on the at least one identifier corresponding to the QUIC connection (202; 302); and
provide the encrypted content for transmission to a second device (240; 340) over the QUIC connection (202; 302).

15. A machine-readable non-transitory medium having stored thereon machine-executable instructions for cryptographically binding content to a QUIC connection (202; 302) by a first device (220; 320) , the instructions comprising:
generating (502) a key (Kₓ) based on at least one identifier corresponding to the QUIC connection (202; 302);
encrypting the content using the key (Kₓ) based on the at least one identifier corresponding to the QUIC connection (202; 302); and
providing the encrypted content for transmission to a second device (240; 340) over the QUIC connection (202; 302).
